# EUROPEAN PATENT APPLICATION

(11) **EP 3 098 381 A1**
(43) Date of publication of application: **30.11.2016**
(21) Application number: 15169562.4
(22) Date of filing: 28.05.2015
(51) Int. Cl.: E21B 43/26, C09K 8/68, C09K 8/88

(54) **FORMULATION COMPRISING AT LEAST ONE HYDROPHOBICALLY ASSOCIATING COPOLYMER, A CROSSLINKING AGENT AND A PROPPANT**

(71) Applicant: BASF SE, 67056 Ludwigshafen am Rhein (DE)
(72) Inventor: Packe-Wirth, Rainer, 83308 Trostberg (DE); Eißmann, Diana, 83308 Trostberg (DE)
(74) Representative: Reitstötter Kinzebach

(57) **Abstract**

The present invention relates to a formulation comprising at least one hydrophobically associating copolymer, a crosslinking agent and a proppant, a process for the exploitation and completion of underground crude oil and natural gas deposits including the introduction of said formulation, as well as the use of said formulation for hydraulic fracturing.

## Description

The present invention relates to a formulation comprising at least one hydrophobically associating copolymer, a crosslinking agent and a proppant, a process for the exploitation and completion of underground crude oil and natural gas deposits including the introduction of said formulation, as well as the use of said formulation for hydraulic fracturing.

Water-soluble thickening polymers are used in many fields of industry, for example in the field of cosmetics, in foods, for production of detergents, printing inks and emulsion paints, but especially in crude oil production.

There are many known chemically different classes of polymers which can be used as thickeners. An important class of thickening polymers is that of what are called "hydrophobically associating polymers". These are water-soluble polymers which have lateral or terminal hydrophobic groups, for example relatively long alkyl chains. In aqueous solution, such hydrophobic groups can associate with each other or with other substances having hydrophobic groups.

According to Taylor, K.C. and Nasr-EI-Din, H.A., "Hydrophobically Associating Polymers for Oilfield Applications", presented at the Canadian International Petroleum Conference, Calgary, AB, Canada, June 12-14, 2007, p.1 , "... hydrophobically associating polymers (AP) are water-soluble polymers that contain a small number (less than one mole percent) of hydrophobic groups attached directly to the polymer backbone...". This definition shall be adhered to for the purpose of the present patent application, keeping in mind, however, that one mole percent can be as much as ten or even twenty percent by weight of that polymer. An important area of use of these hydrophobically associating polymers is in the field of crude oil production, especially of tertiary crude oil production (enhanced oil recovery, EOR). Details of the use of hydrophobically associating copolymers for tertiary crude oil production are described, for example, in the review article by Taylor, K.C. and Nasr-EI-Din, H.A. in J. Petr. Sci. Eng. 1998, 19, 265-280.

A further technique of tertiary crude oil production is known as "polymer flooding". A crude oil deposit is not an underground "lake of crude oil", but rather the crude oil is held in tiny pores of the crude oil-bearing rock. The diameter of the pores in the formation is typically only a few micrometers. For polymer flooding, an aqueous solution of a thickening polymer is injected through injection boreholes into a crude oil deposit. The injection of the polymer solution forces the crude oil through said cavities in the formation from the injection borehole proceeding in the direction of the production borehole, and the crude oil is produced via the production borehole.

The use of an aqueous polymer solution as opposed to pure water prevents channels of different permeability from forming in the course of flooding of the underground formation (known as "fingering"), as a result of which the other underground regions would not be flooded. The addition of the polymer to the aqueous phase reduces the mobility thereof and leads as a result to a more homogeneous flooding operation.

A further technique in crude oil production is known as "hydraulic fracturing". In hydraulic fracturing, for example, a high-viscosity aqueous solution is injected under high pressure into the oil- or gas-bearing formation layer. The high pressure gives rise to cracks in the rock, which facilitates the production of oil or gas. The thickeners used here are in particular guar and the more thermally stable derivatives thereof, for example hydroxypropylguar or carboxymethylhydroxypropylguar (J. K. Fink, Oil Field Chemicals, Elsevier 2003, p. 240 ff). These biopolymers, however, provide a distinct decrease in viscosity with rising temperature. It should be ensured that the aqueous polymer solution contains no insoluble particles. This is because even small gel particles with dimensions in the micrometer range can block the fine pores in the formation and hence stop the crude oil production.

Hydrophobically associating water-soluble copolymers are frequently prepared by what is known as micellar copolymerization. This involves solvating water-insoluble comonomers by the addition of surfactants in an aqueous reaction medium and reacting them with hydrophilic comonomers to yield water-soluble hydrophobically associating copolymers. For example, Macromol. Chem. Phys. 2001 , 202, 1384-1397 describes the micellar copolymerization of the water-soluble comonomers acrylamide, AMPS® (acrylamidomethylpropanesulphonic acid) and MADQUAT ([2-(methacryloyloxy)ethyl]trimethylammonium chloride) with dihexylacrylamide or Λ/-(4-ethylphenyl)acrylamide, while Polymer 1998, 39 (5), 1025-1033 discusses the copolymerization of acrylamide with dihexylacrylamide, and Eur. Polym. J. 2007, 43, 824-834 the copolymerization of acrylamide with *N*-octadecylacrylamide. A further example of a micellar copolymerization is given by J. Colloid Interf. Sci. 2009, 333, 152-163. Acrylamide is reacted here with a polypropylene glycol methacrylate in the presence of SDS.

In addition, WO 85/03510 describes water-soluble hydrophobically associating copolymers of an ethylenically unsaturated water-soluble monomer and of an ethylenically unsaturated amphiphilic monomer with hydrophobic groups. These copolymers are obtained by reaction of water-soluble monomers and amphiphilic monomers, for example dodecylpolyoxyethylene methacrylate.

A further method for preparation of water-soluble hydrophobically associating copolymers is the use of surface-active water-soluble comonomers. Examples of the use of this process can be found in EP 705 854 A1, DE 100 37 629 A1 and DE 10 2004 032 304 A1.

In addition, J. Appl. Polym. Sci. 1999, 74, 21 1-217 discusses the use of a cationic water-soluble hydrophobically associating comonomer which has been obtained by reacting 2-methacryloyloxyethyldimethylamine with 1-bromododecane.

A water-soluble, hydrophobically associating copolymer, which is obtained in presence of a non-polymerizable tenside, processes for the preparation thereof and uses thereof have been described in WO 2011/015520 A1. However, no applications for hydraulic fracturing have been described.

WO 2012/069942 A1 describes the use of a water-soluble hydrophobically associating copolymer as an additive in the development, exploitation and completion of underground crude oil and natural gas deposits and in deep drillings.

It can be stated in general terms that the known non-associating and hydrophobically associating copolymers when used as thickeners in the field of crude oil production have the disadvantage that the viscosity typically decreases with rising temperature. Since the use of these polymers in crude oil production usually takes place at elevated temperature, this disadvantage is particularly serious. A result of the viscosity decrease may lead to a change of rheological characteristics of the thickeners.

A further disadvantage of above-described and commercially available hydrophobically associative polymers is an inappropriate insoluble gel content thereof, formed in the course of dissolution. For example WO 2011/015520 A1 provides a hydrophobically associating copolymer with low or undetectable gel content. Other hydrophobically associating copolymers provide gel contents too high for an application in the field of crude oil production. High gel contents may lead to blocking of porous formations.

The problem underlying the invention was to provide a formulation suitable for use as an additive in the development, exploitation and completion of underground crude oil and natural gas deposits and in deep drillings, in particular in hydraulic fracturing. Suitable formulations can be applied for gel formation in above-mentioned applications in an appropriate amount.

The problem of the underlying invention has been solved by a formulation comprising
(1) at least one hydrophobically associating copolymer having a weight-average molecular weight M_{W} of 1. 10⁵ g/mol to 30·10⁶ g/mol, comprising
   (a) 0.1 to 20 % by weight of units derived from a monomer M of the general formula

      H₂C=C(R¹)-R²-O-(-CH₂-CH₂-O-)ₖ-(-CH₂-CH(R³)-O-)ᵣ(-CH₂-CH₂-O-)ₘ-R⁴ (I)

      wherein
      the (-CH₂-CH₂-O-)ₖ and (-CH₂-CH(R³)-O-), and optionally -(-CH₂-CH₂-O-)ₘ units are arranged in block structure in the sequence shown in formula (I);
      the radicals and indices are each defined as follows:
      - k:: is a number from 10 to 150;
      - l:: is a number from 5 to 25;
      - m:: is a number from 0 to 15;
      - R¹:: is H or methyl;
      - R²:: is independently a single bond or a divalent linking group selected from the group consisting of -(CₙH₂ₙ)- and -O-(C_{n'}H_{2n'})-, where n is an integer from 1 to 6 and n' is an integer from 2 to 6;
      - R³:: is independently a C₂-C₆ hydrocarbyl group or an ether group of the general formula -CH₂-O-R^{3'} where R³ is a C₂-C₆ hydrocarbyl group;
      - R⁴:: is independently H or a hydrocarbyl radical having 1 to 6 carbon atoms;
   (b) 80 to 99.9% by weight of units derived from at least one monoethylenically unsaturated, hydrophilic monomers (b) different from (a), where the monomer (b) comprises
   (b1) at least one uncharged, monoethylenically unsaturated, hydrophilic monomer (b1), selected from the group of (meth)acrylamide, N-methyl(meth)acrylamide, N,N'-dimethyl(meth)acrylamide or N-methylol(meth)acrylamide, and/or
   (b2) at least one anionic, monoethylenically unsaturated, hydrophilic monomer (b2) which comprises at least one acidic group selected from the group of -COOH, - SO₃H and -PO₃H₂ and salts thereof,
   where the proportions are each based on the total amount of all monomer units in the copolymer,
(2) a crosslinking agent selected from the group consisting of a salt of a metal having a valency of > +3, a polyalkyleneimine or a polyalkyleneamine or a mixture thereof; and
(3) a proppant.
2. The formulation of embodiment 1, wherein the radicals and indices of formula (I) are each defined as follows:
- k:: is a number from 20 to 28;
- l:: is a number from 5 to 25;
- m:: is a number from 0 to 15;
- R¹:: is H or methyl;
- R²:: is independently a single bond or a divalent linking group selected from the group consisting of -(CₙH₂ₙ)- and -O-(C_{n'}H_{2n'})-, where n is a natural number from 1 to 6 and n' is a natural number from 2 to 6;
- R³:: is independently a hydrocarbyl radical having 2 to 6 carbon atoms, with the proviso that the sum total of the carbon atoms in all hydrocarbyl radicals R³ is in the range from 15 to 50;
- R⁴:: is independently H or a hydrocarbyl radical having 1 to 4 carbon atoms;
3. The formulation of embodiment 1 or 2, wherein the radicals and indices of formula (I) are each defined as follows:
- k:: is a number from 23 to 26;
- l:: is a number from 5 to 25;

- m:: is a number from 0 to 15;
- R¹:: is H or methyl;
- R²:: is independently a single bond or a divalent linking group selected from the group consisting of -(CₙH₂ₙ)- and -O-(C_{n'}H_{2n'})-, where n is a natural number from 1 to 6 and n' is a natural number from 2 to 6;
- R³:: is independently a hydrocarbyl radical having 2 to 6 carbon atoms, with the proviso that the sum total of the carbon atoms in all hydrocarbyl radicals R³ is in the range from 15 to 50;
- R⁴:: is independently H or a hydrocarbyl radical having 1 to 4 carbon atoms;
4. The formulation of any of the preceding embodiments, wherein the radicals and indices of formula (I) are each defined as follows:
- k:: is a number from 23 to 26;
- l:: is a number from 5 to 25;
- m:: is a number from 0 to 15;
- R¹:: is H;
- R²:: is independently a single bond or a divalent linking group selected from the group consisting of -(CₙH₂ₙ)- and -O-(C_{n'}H_{2n'})-, where n is a natural number from 1 to 6 and n' is a natural number from 3 to 5;
- R³:: is independently a hydrocarbyl radical having 2 to 4 carbon atoms, with the proviso that the sum total of the carbon atoms in all hydrocarbyl radicals R³ is in the range from 15 to 50;
- R⁴:: is H;
5. The formulation of any of the preceding embodiments, wherein m is a number from 0.1 to 15, in particular 1 to 10.
6. The formulation of any of the preceding embodiments, wherein monomer (b1) is selected from acrylamide and methacrylamide or a mixture thereof.
7. The formulation of any of the preceding embodiments, wherein monomer (b2) is selected from (meth)acrylic acid, vinylsulphonic acid, allylsulphonic acid, 2-acrylamido-2-methylpropanesulphonic acid (AMPS), 2-methacrylamido-2-methylpropanesulphonic acid, 2-acrylamidobutanesulphonic acid, 3-acrylamido-3-methylbutanesulphonic acid or 2-acrylamido-2,4,4-trimethylpentanesulphonic acid, and vinylphosphonic acid and a mixture of two or more thereof.
8. The formulation of any of the preceding embodiments, wherein monomer (b2) is selected from acrylic acid, methacrylic acid, vinylsulphonic acid, allylsulphonic acid, 2-acrylamido-2-methylpropanesulphonic acid (AMPS), 2-methacrylamido-2-methylpropanesulphonic acid and a mixture of two or more thereof.
9. The formulation of any of the preceding embodiments, wherein monomer (b2) is selected from acrylic acid, methacrylic acid, 2-acrylamido-2-methylpropanesulphonic acid (AMPS) and a mixture of two or more thereof.
10. The formulation of any of the preceding embodiments, wherein the copolymer comprises units (b) derived from at least one monomer (b1) and at least one monomer (b2).
11. The formulation of embodiment 10, wherein monomer (b1) is acrylamide and monomer (b2) is acrylic acid or
monomer (b1) is acrylamide and monomer (b2) is 2-acrylamido-2-methylpropanesulphonic acid (AMPS).
12. The formulation of embodiment 10, wherein monomer (b1) is acrylamide and monomer (b2) is a mixture of acrylic acid and 2-acrylamido-2-methylpropanesulphonic acid (AMPS).
13. The formulation of any of the preceding embodiments, wherein the uncharged monomers (b1) are used in an amount of 30 to 95% by weight and the anionic monomers (b2) in an amount of 4.9 to 69.9% by weight, where the amounts are each based on the total amount of all monomers used.
14. The formulation of any of the preceding embodiments, wherein the copolymer comprises units derived from the monomer of formula (I), units derived from at least one monomer (b1) and units derived from at least one monomer (b2).
15. The formulation of embodiment 14, wherein the radicals and indices of formula (I) are each defined as follows:

| | |
|---|---|
| k: | is a number from 23 to 26; |
| l: | is a number from 15 to 18; |
| m: | is a number from 2 to 5; |
| R¹: | is H; |
| R²: | is a single bond; |
| R³: | is ethyl; |
| R⁴: | is H. |

16. The formulation of embodiment 15, wherein the radicals and indices of formula (I) are each defined as follows:

| | |
|---|---|
| k: | is 24.5; |
| l: | is 16; |
| m: | is 3.5; |
| R¹: | is H; |
| R²: | is a single bond; |
| R³: | is ethyl; |
| R⁴: | is H. |

17. The formulation of embodiment 1, wherein the radicals and indices of formula (I) are each defined as follows:

| | |
|---|---|
| k: | is a number from 23 to 26; |
| l: | is a number from 8.5 to 17.25; |
| m: | is a number from 0 to 15; |
| R¹: | is H; |
| R²: | is independently a divalent linking group -O-(C_{n'}H_{2n'})- where n' is a natural number from 3 to 5, |
| R³: | is independently a hydrocarbyl radical having 2 to 4 carbon atoms, with the proviso that the sum total of the carbon atoms in all hydrocarbyl radicals R³ or R^{3'} is in the range from 25.5 to 34.5; |
| R⁴: | is H. |

18. The formulation of embodiment 17, wherein the radicals and indices of formula (I) are each defined as follows:

| | |
|---|---|
| k: | is a number from 23 to 26; |
| l: | is a number from 12.75 to 17.25; |
| m: | is a number from 0 to 15; |
| R¹: | is H; |
| R²: | is independently a divalent linking group -O-(C_{n'}H_{2n'})- where n' is a natural number from 3 to 5, |
| R³: | is ethyl; |
| R⁴: | is H. |

19. The formulation of embodiment 1, wherein the radicals and indices of formula (I) are each defined as follows:

| | |
|---|---|
| k: | is a number from 23 to 26; |
| l: | is a number from 8.5 to 11.5; |
| m: | is a number from 0 to 15; |
| R¹: | is H; |
| R²: | is independently a divalent linking group -O-(C_{n'}H_{2n'})- where n' is a natural number from 3 to 5, |
| R³: | is n-propyl; |
| R⁴: | is H. |

20. The formulation of embodiment 1, wherein the radicals and indices of formula (I) are each defined as follows:

| | |
|---|---|
| k: | is a number from 23 to 26; |
| l: | is a number from 8.5 to 17.25; |
| m: | is a number from 0 to 15; |
| R¹: | is H or methyl; |
| R²: | is independently a single bond or a divalent linking group selected from the group consisting of -(CₙH₂ₙ)- and -O-(C_{n'}H_{2n'})-, where n is a natural number from 1 to 6 and n' is a natural number from 2 to 6; |
| R³: | is independently a hydrocarbyl radical having at least 2 carbon atoms, with the proviso that the sum total of the carbon atoms in all hydrocarbyl radicals R³ is in the range from 25.5 to 34.5; |
| R⁴: | is independently H or a hydrocarbyl radical having 1 to 4 carbon atoms. |

21. The formulation of embodiment 20, wherein the radicals and indices of formula (I) are each defined as follows:

| | |
|---|---|
| k: | is a number from 23 to 26; |
| l: | is a number from 8.5 to 17.25; |
| m: | is a number from 0 to 5; |
| R¹: | is H; |
| R²: | is independently a divalent linking group -O-(C_{n'}H_{2n'})- where n' is a natural number from 3 to 5, |
| R³: | is independently a hydrocarbyl radical having 2 to 4 carbon atoms, with the proviso that the sum total of the carbon atoms in all hydrocarbyl radicals R³ is in the range from 25.5 to 34.5; |
| R⁴: | is H. |

22. The formulation of embodiment 1, wherein the radicals and indices of formula (I) are each defined as follows:

| | |
|---|---|
| k: | is a number from 23 to 26; |
| l: | is a number from 12.75 to 17.25; |
| m: | is a number from 0 to 15; |
| R¹: | is H; |
| R²: | is a divalent linking group -O-(C_{n'}H_{2n'})- where n' is 4; |
| R³: | is independently a hydrocarbyl radical having 2 carbon atoms; |
| R⁴: | is H. |

23. The formulation of embodiment 1, wherein the radicals and indices of formula (I) are each defined as follows:

| | |
|---|---|
| k: | is a number from 23 to 26; |
| l: | is a number from 8.5 to 11.5; |
| m: | is a number from 0 to 15; |
| R¹: | is H; |
| R²: | is a divalent linking group -O-(C_{n'}H_{2n'})- where n' is 4; |
| R³: | is a hydrocarbyl radical having 3 carbon atoms; |
| R⁴: | is H. |

24. The formulation of any of the preceding embodiments, wherein the formulation additionally comprises at least one cationic, monoethylenically unsaturated monomer (b3) having ammonium groups.
25. The formulation of embodiment 24, wherein the cationic monomer is a salt of 3-trimethylammonium propyl(meth)acrylamides or 2-trimethylammonium ethyl(meth)acrylates or mixtures thereof.
26. The formulation according to embodiment 24 or 25, wherein the monomers (b1) are used in an amount of 30 to 95% by weight and the monomers (b2) and monomers (b3) together in an amount of 4.9 to 69.9% by weight, with the proviso that the molar (b2)/(b3) ratio is 0.7 to 1.3, and where the amounts are each based on the total amount of all monomers used.
27. The formulation of any of the preceding embodiments, wherein the crosslinking agent is selected from titanium (IV) ions, zirconium (IV) ions, chromium (III) ions, cobalt (III) ions, aluminum (III) ions, hafnium (III) ions and boron (III) and mixtures thereof.
28. The formulation of embodiment 27, wherein the crosslinking agent is selected from chromium acetate, zirconium acetate, zirconyl chloride and zirconyl sulfate and mixtures thereof.
29. The formulation of any one of embodiments 1 to 26, wherein the crosslinking agent is selected from polyethyleneimine, polypropyleneimine, polybutyleneimine,polyethyleneamine, polypropyleneamine and polybutyleneamine and mixtures thereof as well as mixtures thereof with a salt as defined in claim 27 or 28.
30. The formulation of any of the preceding embodiments, wherein the proppant has a particle size of 100 µm to 3 mm, in particular200 µm to 1 mm.
31. The formulation of any of the preceding embodiments, wherein the proppant is selected from group of minerals, ceramics, sands, nut shells, gravels, mine tailings, coal ashes, rocks, smelter slag, diatomaceous earth, crushed charcoals, micas, sawdust, wood chips, resinous particles, polymeric particles, and combinations thereof as well as resin coated products thereof.
32. The formulation of embodiment 31, wherein the proppant is a sand.
33. The formulation of any one of the preceding embodiments, wherein the copolymer is contained in the formulation in an amount of from 0.0001 to 5 % by weight based on the total weight of the formulation.
34. The formulation of any one of the preceding embodiments, wherein the copolymer is contained in the formulation in an amount of from 0.001 to 1 % by weight based on the total weight of the formulation.
35. The formulation of any of the preceding embodiments additionally containing a breaker.
36. The formulation of embodiment 35, wherein the breaker is temperature or diffusion controlled.
37. The formulation of embodiment 35 or 36, wherein the breaker is selected from at least one of a bromate breaker, a chlorite breaker, a peroxide breaker, like H₂O₂ or organic peroxides such as dibenzoyl peroxide, a perborate breaker, a percarbonate breaker, a perphosphate breaker, or a persulfate breaking agent.
38. The formulation of any one of embodiments 35 to 37, wherein the temperature controlled breaker is selected from at least one of potassium, sodium, lithium or ammonium bromate, or benzoyl peroxide, ammonium and potassium persulfate.
39. The formulation of any one of embodiments 35 to 37, wherein the diffusion controlled breaker is selected from at least one of ammonium persulfate and potassium persulfate.
40. The formulation of any of embodiments 35 to 39, wherein the breaker is of encapsulated form, coated form or contained in a suspension.
41. The formulation of embodiment 40, wherein the breaker is of encapsulated form.
42. The formulation of any one of embodiments 35 to 41, wherein the amount of breaker is from 0.1 to 5% by weight based on the total weight of the formulation, in particular 1.0 to 2.5%.
43. The formulation of any one of the preceding embodiments, which additionally comprises a thickener, in particular a carbohydrate thickener.
44. The formulation of embodiment 43, wherein the thickener is guar, an alkylated or carboxyalkylated guar derivative, xanthan gum, an alkylcellulose, a hydroxyalkylcellulose or a carboxyalkylated cellulose, such as carboxymethylcellulose.
45. Process for the exploitation and completion of underground crude oil and natural gas deposits, which comprises
i) introducing the formulation according to any of the preceding embodiments into a subterranean formation,
ii) allowing the formulation to form a gel in the subterranean formation and
iii) optionally breaking the gel after it has been in the subterranean formation for at least about half an hour.
46. The process of embodiment 45, wherein the formulation is introduced into the subterranean formation through at least one injection borehole into a crude oil or natural gas deposit.
47. Process for the exploitation and completion of underground crude oil and natural gas deposits, which comprises
i) introducing the formulation according to any one of embodiments 1 to 44 into a subterranean formation, and
ii) allowing the formulation to form a crosslinked gel in the subterranean formation that, after formation, does not not flow under *in situ* stress within the subterranean formation.
48. The process of embodiment 47, wherein the crosslinked gel at least partially blocks the flow of formation fluids in at least a portion of the subterranean formation.
49. The process of embodiment 47 further comprising breaking the gel after it has been in the subterranean formation for at least half an hour.
50. Use of the formulation according to embodiments 1 to 44 for hydraulic fracturing.

The term "hydrocarbyl" as used herein means a monovalent, saturated or unsaturated hydrocarbon radical. Examples for hydrocarbyl groups are C₁-C₁₂ alkyl, C₂-C₁₂ alkenyl, C₂-C₁₂ alkinyl or phenyl.

The term "unit derived from...." as used herein means a structural unit that is obtained from an ethylenically unsaturated monomer after a free radical initiated polymerization and is part of the polymer chain.

In the monomers according to formula (I), an ethylenic group H₂C=C(R¹)- is bonded via a divalent linking group -R²-O- to a polyalkyleneoxy radical in block structure -(-CH₂-CH₂-O-)ₖ-(-CH₂-CH(R³)-O-)ₗ-R4, where the two blocks -(-CH₂-CH₂-O-)ₖ and -(-CH₂-CH(R³)-O-)ₗ are arranged in the sequence shown in formula (I). Optionally, the macromonomer M of formula (I) may comprise a further polyethyleneoxy block -(-CH₂-CH₂-O-)ₘ. The terminal polyalkyleneoxy radical -(-CH₂-CH(R³)-O-)ₗ or -(-CH₂-CH₂-O-)ₘ has either a terminal OH group or a terminal ether group -OR⁴.

It will be apparent to the person skilled in the field of polyalkylene oxides that the orientation of the hydrocarbyl radicals R³ may depend on the conditions of the alkoxylation, for example on the catalyst selected. The alkyleneoxy groups may thus be incorporated into the monomer either in the orientation -(-CH₂-CH(R³)-O-) or in the inverse orientation -(-CH(R³)-CH₂₋O-)-. The representation in formula (I) shall therefore not be regarded as being restricted to a particular orientation of the R³ group.

The linking R² group especially comprises straight-chain or branched aliphatic acyclic hydrocarbyl groups having 1 to 6 carbon atoms, which are joined either directly or via an ether group -O- to the ethylenic group H₂C=C(R¹)-. The -(CₙH₂ₙ)-, and -(C_{n'}H_{2n'})- groups are preferably linear aliphatic hydrocarbyl groups.

The R² = -(CₙH₂ₙ)- group is preferably a group selected from -CH₂-, -CH₂-CH₂- and -CH₂-CH₂-CH₂-, particular preference is given to a methylene group -CH₂-.

The R² = -O-(Cn'H₂ₙ')- group is preferably a group selected from -O-CH₂-CH₂-, -O-CH₂-CH₂-CH₂-and -O-CH₂-CH₂-CH₂-CH₂-, particular preference is given to -O-CH₂-CH₂-CH₂-CH₂-.

In addition, R² is more preferably a group selected from -CH₂- and -O-CH₂-CH₂-CH₂-CH₂-, very particular preference being given to -O-CH₂-CH₂-CH₂-CH₂-.

The monomers according to formula (I) additionally have a polyalkyleneoxy radical consisting of the (-CH₂-CH₂-O-)ₖ, (-CH₂-CH(R³)-O-), and optionally -(-CH₂-CH₂-O-)ₘ units, where the units are arranged in block structure in the sequence shown in formula (I). For the person skilled in the art in the field of polyalkylene oxide block copolymers, it is clear that the transition between the two blocks can be abrupt or continuous, depending on the type of preparation. In the case of a continuous transition, between the two blocks there is also a transition zone which comprises monomers of the two blocks. If the block limit is fixed in the middle of the transition zone, correspondingly the first block -(-CH₂-CH₂O-)ₖ can still have small amounts of units -CH₂-CH(R³)-O-, and the second block -(-CH₂-CH(R³)-O-)ₗ- can have small amounts of units-CH₂-CH₂-O-, although these units are not distributed randomly over the block, but are arranged in said transition zone.

The -(-CH₂-CH₂-O-)ₖ block is a polyethyleneoxy radical. The number of alkyleneoxy units k is a number from 10 to 150, preferably 12 to 100, more preferably 15 to 80, even more preferably 20 to 40. It will be apparent to the person skilled in the art in the field of polyalkylene oxides that the numbers mentioned are mean values of distributions.

In the second, terminal block -(-CH₂-CH(R³)-O-)ₗ, the R³ radicals are each independently hydrocarbyl radicals having at least 2 carbon atoms, preferably 2 to 6 carbon atoms, preferably 2 to 4, and more preferably 2 or 3 carbon atoms. R³ may be an aliphatic and/or aromatic, linear or branched hydrocarbyl radical. Preference is given to aliphatic radicals. Examples of suitable R³ radicals comprise ethyl, n-propyl, n-butyl, n-pentyl, n-hexyl and phenyl. Examples of preferred radicals comprise n-propyl, n-butyl and n-pentyl. R³ is more preferably ethyl and/or n-propyl.

The R³ radicals may additionally be ether groups of the general formula -CH₂-O-R³ where R³ is an aliphatic and/or aromatic, linear or branched hydrocarbyl radical having 2 to 6 carbon atoms, preferably 2 to 4 carbon atoms. Examples of R³ radicals comprise n-propyl, n-butyl, n-pentyl, n-hexyl or phenyl.

The -(-CH₂-CH(R³)-O-)ₗ- block is thus a block consisting of alkyleneoxy units having at least 4 carbon atoms, preferably at least 5 carbon atoms, and/or glycidyl ethers having an ether group of at least 2, preferably at least 3 carbon atoms. The units of the second terminal block are more preferably alkyleneoxy units comprising at least 4 and/or 5 carbon atoms, such as butyleneoxy units and/or pentyleneoxy units.

The number of alkyleneoxy units I is a number from 5 to 25, preferably 6 to 20, more preferably 8 to 18. It will be apparent to the person skilled in the art in the field of polyalkylene oxides that the numbers mentioned are mean values of distributions.

Particular preference is given to the monomer of formula (I), wherein k is a number from 23 to 26 and l is a number from 8.5 to 17.25, with the proviso that the sum total of the carbon atoms in all hydrocarbyl radicals R³ or R^{3'} is in the range from 15 to 60, preferably 15 to 56, more preferably 15 to 50, in particular 25.5 to 34.5.

The -(-CH₂-CH₂-O-)ₘ block is a polyethyleneoxy radical. The number of alkyleneoxy units m is a number from 0 to 15, preferably 0 to 10, more preferably 0.1 to 15, more preferably 0.1 to 10,. In a preferred embodiment of the invention, m=0. It will be apparent to the person skilled in the art in the field of polyalkylene oxides that the numbers mentioned are mean values of distributions.

The R⁴ radical is H or a preferably hydrocarbyl radical having 1 to 6 carbon atoms. R⁴ is preferably H, methyl or ethyl, more preferably H or methyl and most preferably H.

According to the invention, the monomers (a) are water-soluble. The solubility of the monomers (a) in water at room temperature should be at least 10 g/l, preferably at least 50 g/l and particularly preferably at least 100 g/l.

The amount of monoethylenically unsaturated, hydrophobically associating monomers (a) is governed by the particular intended use of the copolymer according to the invention and is generally 0.1 to 20% by weight, based on the total amount of all of the monomers in the copolymer. Preferably, the amount is 0.5 to 15% by weight.

Besides the monomers (a), the hydrophobically associating copolymer according to the invention comprises 80 to 99.9% by weight of units derived from at least one monoethylenically unsaturated, hydrophilic monomer (b) different than (a). It is of course also possible to use mixtures of two or more different hydrophilic monomers (b).

The monomers (b) are preferably miscible with water in any desired ratio. Generally, the solubility of the monomers (b) in water at room temperature should be at least 100 g/l, preferably at least 200 g/l and particularly preferably at least 500 g/l. Monomers (b) may be selected from uncharged monoethylenically unsaturated, hydrophilic monomers (b1) and /or at least one anionic, monoethylenically unsaturated, hydrophilic monomer (b2).

Examples of suitable monomers (b1) comprise acrylamide and methacrylamide, preferably acrylamide, and derivatives thereof, for example N-methyl(meth)acrylamide, N,N'-dimethyl(meth)acrylamide and N-methylolacrylamide. Additional examples are N-vinyl derivatives such as N-vinylformamide, N-vinylacetamide, N-vinylpyrrolidone or N-vinylcaprolactam. Mention should additionally be made of monomers having OH groups such as hydroxyethyl (meth)acrylate, hydroxypropyl (meth)acrylate, allyl alcohol, hydroxyvinyl ethyl ether, hydroxyvinyl propyl ether or hydroxyvinyl butyl ether. The monomer (b1) is preferably acrylamide or derivatives thereof, more preferably acrylamide.

Examples of suitable monomers (b2) include monomers comprising acidic groups, for example monomers comprising -COOH groups, such as acrylic acid or methacrylic acid, crotonic acid, itaconic acid, maleic acid or fumaric acid, monomers comprising sulfonic acid groups, such as vinylsulfonic acid, allylsulfonic acid, 3-allyloxy-2-hydroxypropanesulfonic acid, 2-acrylamido-2-methylpropanesulfonic acid (AMPS), 2-methacrylamido-2-methylpropanesulfonic acid, 2-acrylamidobutanesulfonic acid, 3-acrylamido-3-methylbutanesulfonic acid or 2-acrylamido-2,4,4-trimethylpentanesulfonic acid, or monomers comprising phosphonic acid groups, such as vinylphosphonic acid, allylphosphonic acid, N-(meth)acrylamidoalkylphosphonic acids or (meth)acryloyloxyalkylphosphonic acids.

Monomer (b2) is preferably selected from (meth)acrylic acid, vinylsulfonic acid, allylsulfonic acid, 2-acrylamido-2-methylpropanesulfonic acid (AMPS), 2-methacrylamido-2-methylpropanesulfonic acid, 2-acrylamidobutanesulfonic acid, 3-acrylamido-3-methylbutanesulfonic acid or 2-acrylamido-2,4,4-trimethylpentanesulfonic acid, vinylphosphonic acid or mixtures thereof.

(b2) is more preferably selected from acrylic acid, methacrylic acid, 2-acrylamido-2-methylpropanesulfonic acid (AMPS) and a mixture of two or more thereof.

Preferred is a formulation of the invention, wherein monomer (b1) is selected from acrylamide and methacrylamide or a mixture thereof.

Particularly preferred is a formulation of the invention, wherein monomer (b1) is acrylamide and monomer (b2) is acrylic acid.

Further preferred is a formulation of the invention, wherein monomer (b1) is acrylamide and monomer (b2) is 2-acrylamido-2-methylpropanesulfonic acid (AMPS).

Further preferred is a formulation of the invention, wherein monomer (b1) is acrylamide and monomer (b2) is a mixture of acrylic acid and 2-acrylamido-2-methylpropanesulfonic acid (AMPS).

Particularly preferred is a formulation of the invention, wherein the uncharged monomers (b1) are used in an amount of 30 to 95% by weight and the anionic monomers (b2) in an amount of 4.9 to 69.9% by weight, where the amounts are each based on the total amount of all monomers used.

Particularly preferred is a formulation of the invention, wherein the copolymer comprises units derived from the monomer of formula (I), units derived from at least one monomer (b1) and units derived from at least one monomer (b2).

The copolymer can, moreover, also comprise at least one cationic monomer (b3) having ammonium groups, where the cationic monomer comprises salts of 3-trimethylammonium propyl(meth)acrylamides and 2-trimethylammonium ethyl (meth)acrylates.

Preferred is a formulation according to the invention, wherein the monomers (b1) are used in an amount of 30 to 95% by weight and the monomers (b2) and monomers (b3) together in an amount of 4.9 to 69.9% by weight, with the proviso that the molar (b2)/(b3) ratio is 0.7 to 1.3, and where the amounts are each based on the total amount of all monomers used.

The aforementioned hydrophilic monomers can of course be used not only in the depicted acid or base form, but also in the form of corresponding salts. It is also possible to convert acidic or basic groups to corresponding salts after the formation of the polymer.

Overall, the units derived from monomers (a) should be present in the hydrophobically associating polymer (I) in amounts of from 0.1 to 20.0% by weight, preferably from 0.1 to 5% by weight, the monomer component (b) should be present in amounts of from 80.0 to 99.9% by weight, preferably 95.0 to 99.9% by weight, in each case based on the total amount of all monomer units in the copolymer. The precise amount is governed by the type and the desired intended use of the hydrophobically associating copolymers and is established accordingly by the person skilled in the art.

The hydrophobically associating copolymer (1) provides an weight-average molecular weight M_{w} of 1.10⁵ g/mol to 30-10⁶ g/mol, preferably 2·10⁵ g/mol to 20-10⁶ g/mol, in particular 5·10⁵ g/mol to 15·10⁶ g/mol.

Preferably the copolymer (I) is contained in the formulation in an amount of from 0.0001 to 5 % by weight based on the total weight of the formulation, in particular 0.001 to 1 % by weight.

Further, the formulation of the invention comprises a crosslinking agent. The crosslinking agent may preferably be a metal ion having a valency of ≥ +3. Metal ions suitable to serve as crosslinking agents in the present embodiments preferably include titanium (IV) ions, zirconium (IV) ions, chromium (III) ions, cobalt (III) ions, aluminum (III) ions, hafnium (III) ions, and the like. Particularly preferred as crosslinking agents are chromium acetate, zirconium acetate, zirconyl chloride or zirconyl sulfate. In a further preferred embodiment of the formulation of the invention, a metal ion-releasing compound such as a coordination compound can be used as crosslinking agent. The crosslinking agent may also be an organic crosslinking agent such as, for example, a diamine, dithiol or a diol. Further preferred as a crosslinking agent are organic polymers such as, for example, a polyester with at least two terminal hydroxy groups, a polyalkyleneimine (e.g., polyethyleneimine) or a polyalkylenepolyamine. Particularly preferred are crosslinking agents selected from polyethyleneimine, polypropyleneimine, polybutyleneimine,polyethyleneamine, polypropyleneamine and polybutyleneamine.

Further, mixtures of crosslinking agents can be used to achieve a desired rate of crosslinking. For example, a crosslinking agent that produces a slower rate of crosslinking can be added as a gelation retarder, and in other embodiments, a crosslinking agent that produces a faster rate of crosslinking can be added as a gelation accelerator. In some embodiments, a gelation retarder or a gelation accelerator can, respectively, increase or decrease the temperature at which gelation takes place. In some embodiments, a metal ion-containing crosslinking agent can contain various concentrations of acetate and lactate, which will determine, whether the added crosslinking agent serves as a gelation retarder or a gelation accelerator. Appropriate amounts of acetate and lactate ions to be added to a metal ion-containing crosslinking agent to serve as either a gelation retarder or gelation accelerator can be determined through routine experimentation by one having ordinary skill in the art. Other agents that can be added to control the rate and/or temperature of gelation can include, for example, other α-hydroxy acids (e.g., glycolic acid, tartaric acid and the like), diols and polyols.

The formulation of the invention preferably contains the crosslinking agent in amount of from 1 wt. % to 2 wt. based on the total weight of the formulation, in particular 1 wt. % to 1.6 wt. %.

In order to form a gel having a suitable temperature stability and viscosity profile, an amount of copolymer (I) to the crosslinking agent is typically maintained at a weight ratio of about 100 : 1, preferably of about 6 : 1. Particularly preferred is a weight ratio of the copolymer (I) to the crosslinking agent in a range of from 6 : 1 to 2 : 1, in particular 6 : 1 and about 1 : 1.

The formulation of the invention further comprises a proppant. The proppant preferably has a particle size of of 100 µm to 3 mm, in particular 200 µm to 1 mm. Suitable as a proppant are for example particles including minerals, ceramics such as sintered ceramic particles, sands, nut shells, gravels, mine tailings, coal ashes, rocks, smelter slag, diatomaceous earth, crushed charcoals, micas, sawdust, wood chips, resinous particles, polymeric particles, and combinations thereof. Further, the proppants coated with a resin may be used like resin coated sand from Hexion http://www.hexion.com/Products/TechnicalDataSheets.aspx?id=629).

It is to be appreciated that other particles not recited herein may also be suitable for the purposes of the invention.

Sand is a particularly preferred particle. Examples of suitable sands include, but are not limited to, Arizona sand, Wisconsin sand, Badger sand, Brady sand, and Ottawa sand. Based on cost and availability, inorganic materials such as sand and sintered ceramic particles are typically favored for applications not requiring filtration.

Specific examples of suitable sintered ceramic particles include, but are not limited to, aluminum oxide, silica, bauxite, and combinations thereof. The sintered ceramic particle may also include clay-like binders.

Further, the formulation of the invention optionally contains a breaker.

The breaker may be an oxidizing agent such as ammonium, lithium, sodium or potassium bromate salt that serves as an oxidizing agent. Additionally, other oxidizing breakers, such as inorganic oxidizers and organic peroxides (e.g. salts of chlorite, and persulfate or benzoyl peroxide) may be used.

Besides bromate breakers, also chlorite breakers, peroxide breakers, perborate breakers, percarbonate breakers, perphosphate breakers, or persulfate breakers may preferably be applied.

The breaker may be temperature or diffusion controlled. Among temperature controlled breakers potassium, sodium, lithium or ammonium bromate, or benzoyl peroxide are preferred. Among diffusion controlled breakers ammonium persulfate and potassium persulfate are preferred.

Further, mixtures of two or more of said breakers may be applied.

Preferably the breaker is used in encapsulated form, coated form or contained in a suspension, in particular in encapsulated form.

The breakers may initially be in a solid or liquid form. The solids may be encapsulated or provided with a coating to delay their release into the formulation of the invention. Further, the solid may be compounded with other solids to effect a delayed action or to combine two necessary chemicals into one additive. The breaker can also be suspended in a carrier fluid in which it is sparingly soluble or insoluble and delivered as a liquid additive. Encapsulating materials and methods of encapsulating breaking materials are known in the art. Non-limiting examples of materials and methods that may be used for encapsulation are described, for instance, in U.S. Pat. Nos. 4,741,401; 4,919,209; 6,162,766 and 6,357,527.

Should it be desirable for the breakers to be coated to delay breaking action, the coating can be done by any known process. Two main types of coating process, top spray and bottom spray, are characterized by the location of the spray nozzle at the bottom or the top of a fluidized bed of solid particles. The nozzle sprays an atomized flow of coating solution while the particles are suspended in the fluidizing air stream that carries the particles past the spray nozzle. The particles then collide with the atomized coating material as they are carried away from the nozzle in a cyclic flow. The temperature of the fluidizing air is set to evaporate solution or suspension liquid media or solidify the coating material shortly after colliding with the particles. The solidified coating materials will cover the particles gradually. This process is continued until each particle is coated uniformly to the desired coating thickness.

The amount of breaker is preferably from 0.1 to 5% by weight, in particular 1.0 to 2.5%, based on the total weight of the formulation.

The present invention additionally relates to a process for the exploitation and completion of underground crude oil and natural gas deposits, which comprises
i) introducing the formulation according to the invention into a subterranean formation,
ii) allowing the formulation to form a gel in the subterranean formation and
iii) optionally breaking the gel after it has been in the subterranean formation for a time sufficient to produce cracks in the subterranean formation, in particular for at least half an hour. Preferably the formulation is introduced into the subterranean formation through at least one injection borehole into a crude oil or natural gas deposit. In general, the formulation is introduced under high pressure which is suitable to give rise to cracks in the subterranean formation which facilitate the release of oil or gas.

The present invention additionally relates to a process for the exploitation and completion of underground crude oil and natural gas deposits, which comprises
i) introducing the formulation of the invention (preferably under high pressure) into a subterranean formation, and
ii) allowing the formulation to form a crosslinked gel in the subterranean formation that, after formation, does not flow under *in situ* stress within the subterranean formation.

Preferably the crosslinked gel at least partially blocks the flow of formation fluids in at least a portion of the subterranean formation. Said process may optionally comprise breaking the crosslinked gel after it has been in the subterranean formation for at least about half an hour.

The present application utilizes gellable formulations that form thermally stable gels in a subterranean formation that can persist for extended periods of time. More particularly, the gellable formulations comprise a copolymer and a crosslinking agent, where the copolymer and the crosslinking agent form a gel downhole and the gelation can be initiated or accelerated by the formation temperature.

The crosslinking rate can be further accelerated or decelerated, as desired, by using gelation accelerators or retarders, respectively, such that the gel can be formed in a desired location within the subterranean formation. Since the formulations can be introduced to the subterranean formation in an ungelled state, significant issues due to friction pressure are not typically encountered. Once in the subterranean formation, the gellable formulations can form a crosslinked gel therein that does not flow under in situ stress after placement. As used herein, the term "in situ stress" refers to shearing forces present within a subterranean formation, including, for example, manmade shear produced during subterranean operations and naturally occurring shear forces present within the subterranean formation. In some embodiments, the copolymer can become fully crosslinked in the presence of a crosslinking agent. As used herein, the terms "full crosslinking," "complete crosslinking," and grammatical equivalents thereof will refer to an amount of crosslinking that achieves a viscosity that cannot be substantially further increased by increasing the amount of crosslinking agent.

Gels formed using the above copolymer can have surprisingly high thermal stabilities over extended periods of time, which can make them suitable for subterranean operations in which it is desirable to at least partially block the flow of fluids in the subterranean formation for a period of days to weeks at elevated formation temperatures. In particular, in certain cases, the present formulations containing the copolymer can maintain a stable gel state for at least about 20 days at a temperature of 320°F. The thermal stability of the gels allows said formulations to be used as kill pills and perforation pills for impeding the flow of fluids, particularly formation fluids, within a subterranean formation. In addition, the present formulations can be used for long-term fluid loss control applications for similar reasons.

The present formulation can also be used in combination with other typically used viscosity generating polymers like guar, hydroxypropylguar, hydroxyethylcellulose, xanthan gum, carboxymethy cellulose and derivatives thereof, either crosslinked or in linear form. The amount of thickener depends on the formulation and is, in general, such that a deposit of the proppant is avoided.

Further, the described formulation also shows high viscosity in high ionic strength waters, like seawater or formation water.

The present formulations can also have the advantage of not significantly altering the regain permeability of the subterranean formation after the gel breaks. As used herein, the term "regain permeability" refers to the propensity of a fluid to flow through a subterranean formation after a gel that blocks fluid flow has been broken or removed. In some embodiments, the present formulations, when gelled, can effectively block fluid flow in a core sample, and after breaking or removing the gel, fluid can again flow through the core sample at nearly the same rate as before the gel was applied thereto. That is, it is believed that the present treatment fluids can be substantially non-damaging to a subterranean formation after breaking of the gel.

Gels formed from the present formulations can be allowed to break at their native rate without using a breaker, if desired, in some embodiments. In some embodiments, the native break rate of the gel can be changed by altering the composition of the gel formulation in the absence of a breaker. In alternative embodiments, a breaker or delayed-release breaker can be used to break the gel, if desired. Accordingly, the present treatment fluids can be utilized over a wide range of times in subterranean operations.

When the present formulations are left downhole for an extended period of time, it can sometimes be desirable to include one or more gel stabilizers into the formulation to increase the long term thermal stability of the gel. In some embodiments, suitable gel stabilizers can comprise one or more antioxidants that increase the chemical stability of the copolymer. Without being bound by any theory or mechanism, it is believed that inclusion of an antioxidant in the formulations can limit oxidative damage to the copolymer that can otherwise occur over extended periods of time at high temperatures. Oxidative damage can include polymer chain scission, for example, which can reduce the ability of the copolymer to form a gel. In some cases, extended exposure to high temperatures can be damaging to the antioxidant itself, which can limit its ability to protect the copolymer from oxidative damage.

The present invention further relates to the use of the formulation according to the preceding embodiments for hydraulic fracturing.

The following examples are intended to illustrate the invention in more detail and with reference to the accompanying figures.
**Fig. 1** shows the results for the viscosity measurements of copolymers 1) to 3). Copolymer 1) is labelled as A23927, copolymer 2) is labelled as A23955, copolymer 3) is labelled as A23928).
**Fig. 2** shows the results for the viscosity measurements of copolymers 4) to 6). Copolymer 4) is labelled as A20441, copolymer 5) is labelled as A22842, copolymer 6) is labelled as A23776).
**Fig. 3** shows the results for viscosity measurements in correlation with the shear rate of the non-crosslinked copolymer samples of copolymers 1), 2), 3) and Guar (available from Sigma Aldrich) at 25 °C.
**Fig. 4** shows the results for viscosity measurements in correlation with the shear rate of the non-crosslinked copolymer samples of copolymers 1), 2), 3) and Guar (available from Sigma Aldrich) at 60 °C.
**Fig. 5** shows the results for viscosity measurements in correlation with the shear rate of the non-crosslinked copolymer samples of copolymers 1), 2), 3) and Guar (available from Sigma Aldrich) at 88 °C.
**Fig. 6** shows the results for viscosity measurements in correlation with the shear rate of the crosslinked copolymer samples of copolymers 1), 2), 3) and Guar (available from Sigma Aldrich) at 25 °C.
**Fig. 7** shows the results for viscosity measurements in correlation with the shear rate of the crosslinked copolymer samples of copolymers 1), 2), 3) and Guar (available from Sigma Aldrich) at 60 °C.
**Fig. 8** shows the results for viscosity measurements in correlation with the shear rate of the crosslinked copolymer samples of copolymers 1), 2), 3) and Guar (available from Sigma Aldrich) at 88 °C.

### Examples

Preparation of polymers of formula I as disclosed in WO 2014/095608:

### Example M1 HBVE - 24.5 EO - 16 BuO - 3.5 EO (0.4 mol% of potassium ions, 5.5 mol% of sodium ions addition of the BuO at 127°C up to 3.1 bar

HBVE - 22 EO (0.4 mol% of potassium ions):
A 2 I pressure autoclave with anchor stirrer was initially charged with 135.3 g (1.16 mol) of hydroxybutyl vinyl ether (HBVE) (stabilized with 100 ppm of potassium hydroxide (KOH)) and the stirrer was switched on. 1.06 g of potassium methoxide (KOMe) solution (32% KOMe in methanol (MeOH), corresponding to 0.0048 mol of potassium) were fed in and the stirred vessel was evacuated to a pressure less than 10 mbar, heated to 80°C and operated at 80°C and a pressure of less than 10 mbar for 70 min. MeOH was distilled off.

The mixture was purged three times with N₂ (nitrogen). Thereafter, the vessel was checked for pressure retention, 0.5 bar gauge (1.5 bar absolute) was set and the mixture was heated to 120°C. The mixture was decompressed to 1 bar absolute and 1126 g (25.6 mol) of ethylene oxide (EO) were metered in until p_{maX} was 3.9 bar absolute and Tₘₐₓ was 150°C. After 300 g of EO had been added, the metered addition was stopped (about 3 h after commencement) for a wait period of 30 min and the mixture was decompressed to 1.3 bar absolute. Thereafter, the rest of the EO was metered in. The metered addition of EO including the decompression took a total of 10 h. Stirring was continued up to constant pressure at approx. 145-150°C (1 h), and the mixture was cooled to 100°C and freed of low boilers at a pressure of less than 10 mbar for 1 h. The material was transferred at 80°C under N₂.

The analysis (OH number, GPC, 1 H NMR in CDCl₃, 1 H NMR in MeOD) confirmed the structure.

HBVE - 24.5 EO - 16 BuO - 3.5 EO (0.4 mol% of potassium ions, 5.5 mol% of sodium ions):

A 2 I pressure autoclave with anchor stirrer was charged with 588.6 g (0.543 mol) of HBVE - 22 EO and the stirrer was switched on. Thereafter, 2.39 g of 50 % sodium hydroxide solution (0.030 mol NaOH; 1.19 g NaOH) were added, a reduced pressure of <10 mbar was applied, and the mixture was heated to 100°C and kept there for 80 min, in order to distill off the water.

The mixture was purged three times with N₂. Thereafter, the vessel was checked for pressure retention, 0.5 bar gauge (1.5 bar absolute) was set, the mixture was heated to 120°C and then the pressure was set to 1.6 bar absolute. 50.3 g (1.144 mol) of EO were metered in up to 127°C; p_{maX} was 3.9 bar absolute. After waiting for 30 min for establishment of constant pressure, the mixture was decompressed to 1.0 bar absolute.

625.5 g (8.688 mol) of BuO (butylene oxide) were metered in at 127°C; p_{maX} was 3.1 bar absolute. One intermediate decompression was necessary owing to increasing fill level. The BuO metering was stopped, and the mixture was left to react for 1 h until pressure was constant and decompressed to 1.0 bar absolute. Thereafter, the metered addition of BuO was continued. p_{maX} was still 2.1 bar (first decompression after 610 g of BuO, total BuO metering time 8 h incl. decompression break). After metered addition of BuO had ended, reaction was allowed to continue for 8 h and the mixture was then heated to 135°C. Thereafter, 83.6 g (1.901 mol) EO were metered in at 135°C, pₘₐₓ was 3.1 bar absolute. The mixture was cooled to 110°C, and residual oxide was drawn off until the pressure was below 10 mbar for at least 10 min. Then 0.5% water was added at 120°C and volatiles were subsequently drawn off until the pressure was below 10 mbar for at least 10 min. The vacuum was broken with N₂ and 100 ppm of BHT were added. The transfer was effected at 80°C under N₂.

The analysis (mass spectrum, GPC, 1 H NMR in CDCl₃, 1 H NMR in MeOD) confirmed the structure.

The preparation of other polymers of formula I is disclosed in WO 2014/095621, see the examples section. The following polymers can be prepared and used for copolymerization with monomer (b):
- Example M2: HBVE - 22 EO - 10.6 PeO (0.4 mol% of potassium ions, 4.6 mol% of sodium ions), addition of the PeO at 140°C to 3.2 bar
- Example M3: HBVE - 22 EO - 10.5 PeO (0.4 mol% of potassium ions, 3.3 mol% of sodium ions), addition of the PeO at 140°C to 2.1 bar
- Example M4: HBVE - 22 EO - 10 PeO (0.4 mol% of potassium ions, 4.6 mol% of sodium ions), addition of the PeO at 127°C to 2.1 bar
- Example M5: HBVE - 22 EO - 11 PeO (0.4 mol% of potassium ions, 4.6 mol% of sodium ions), addition of the PeO at 127°C to 2.1 bar
- Example M6: HBVE - 24.5 EO - 11 PeO (0.4 mol% of potassium ions, 4.6 mol% of sodium ions), addition of the PeO at 127°C to 2.1 bar
- Example M7: HBVE - 24.5 EO - 10 PeO (0.4 mol% of potassium ions, 4.6 mol% of sodium ions), addition of the PeO at 127°C to 2.1 bar
- Example M8: HBVE - 24.5 EO - 10 PeO (0.9 mol% of potassium ions, 4.1 mol% of sodium ions), addition of the PeO at 127°C to 2.1 bar
- Example M9: HBVE - 24.5 EO - 10 PeO (1.5 mol% of potassium ions, 4.6 mol% of sodium ions), addition of the PeO at 127°C to 2.1 bar
- Example M10: HBVE - 24.5 EO - 10 PeO (0.4 mol% of potassium ions, 5.5 mol% of sodium ions), addition of the PeO at 127°C to 2.1 bar
- Example M11: HBVE - 24.5 EO - 9 PeO (0.4 mol% of potassium ions, 5.5 mol% of sodium ions), addition of the PeO at 127°C to 2.1 bar
- Example M12: HBVE - 24.5 EO - 9 PeO (5.8 mol% of potassium ions), addition of the PeO at 127°C to 2.1 bar
- Example M13: HBVE - 24.5 EO - 8 PeO (0.4 mol% of potassium ions, 4.6 mol% of sodium ions), addition of the PeO at 127°C to 2.1 bar
- Example M14: HBVE - 26.5 EO - 10 PeO (0.4 mol% of potassium ions, 5.5 mol% of sodium ions), addition of the PeO at 127°C to 2.1 bar
- Example M15: HBVE - 24.5 EO - 10 PeO (0.4 mol% of potassium ions, 5.5 mol% of sodium ions), addition of the PeO at 122°C to 2.1 bar
- Example M16: HBVE - 24.5 EO - 10 PeO (0.4 mol% of potassium ions, 5.5 mol% of sodium
- Example M17: HBVE - 24.5 EO - 10 BuO (0.4 mol% of potassium ions, 5.5 mol% of sodium ions), addition of the BuO at 127°C to 2.1 bar
- Example M18: HBVE - 24.5 EO - 12 BuO (0.4 mol% of potassium ions, 5.5 mol% of sodium ions), addition of the BuO at 127°C to 2.1 bar
- Example M19: HBVE - 24.5 EO - 14 BuO (0.4 mol% of potassium ions, 5.5 mol% of sodium ions), addition of the BuO at 127°C to 2.1 bar
- Example M20: HBVE - 24.5 EO - 16 BuO (0.4 mol% of potassium ions, 5.5 mol% of sodium ions), addition of the BuO at 127°C to 2.1 bar
- Example M21: HBVE - 24.5 EO - 18 BuO (0.4 mol% of potassium ions, 5.5 mol% of sodium ions), addition of the BuO at 127°C to 2.1 bar
- Example M22: HBVE - 24.5 EO - 16 BuO (5.8 mol% of potassium ions), addition of the BuO at 127°C to 3.1 bar
- Example M23: HBVE - 24.5 EO - 16 BuO (0.4 mol% of potassium ions, 511 mol% of sodium ions), addition of the BuO at 127°C to 3.1 bar
- Example M24: HBVE - 24.5 EO - 17 BuO (0.4 mol% of potassium ions, 5.5 mol% of sodium ions), addition of the BuO at 127°C to 3.1 bar
- Example M25: HBVE - 24.5 EO - 16 BuO - 3.5 EO (0.4 mol% of potassium ions, 5.5 mol% of sodium ions), addition of the BuO at 127°C to 3.1 bar
- Example M26: HBVE - 24.5 EO - 16 BuO - 5 EO (0.4 mol% of potassium ions, 5.5 mol% of sodium ions), addition of the BuO at 127°C to 3.1 bar
- Example M27: HBVE - 24.5 EO - 10 BuO - 3.5 EO (0.4 mol% of potassium ions, 5.5 mol% of sodium ions), addition of the BuO at 127°C to 3.1 bar
- Example M28: HBVE - 24.5 EO - 5 BuO - 3.5 EO (0.4 mol% of potassium ions, 5.5 mol% of sodium ions), addition of the BuO at 127°C to 3.1 bar
- Example M29: HBVE - 24.5 EO - 22 BuO - 3.5 EO (0.4 mol% of potassium ions, 5.5 mol% of sodium ions), addition of the BuO at 127°C to 3.1 bar
- Example M30: HBVE - 24.5 EO - 16 BuO - 3.5 EO (0.4 mol% of potassium ions, 5.5 mol% of sodium ions), addition of the BuO at 127°C from 4 to 6 bar.

### Preparation of hydrophobically associating copolymers:

A reaction vessel equipped with magnetical stirrer, pH meter and thermometer was charged with 1033.6 g of Na-AMPS (50 wt.-% aqueous solution). Subsequently, 898.5 g of deionized water, 69.2 g of sodium acrylate (35 wt.-% aqueous solution), 3.5 g DC Antifoam Emulsion RD, 1319.6 acrylic amide (50 wt.-% aqueous solution), 10.5 g Trilon C (5 wt.-% aqueous solution), 60.50 g of polymer M1 and 35.0 g of Lutensol TO15 (isotridecanol ethoxylated with 15 moles EO) were added consecutively. After adjusting the pH to 6.5 with a 20% sulfuric acid and adding 25.1 g of water the temperature of the monomer solution was brought to 4°C. The solution was filled into a thermos bottle which was provided with a thermocouple and the bottle was purged with nitrogen for 45 min. At the end of the nitrogen purge online measuring of the temperature was started and 35 g of a 4 wt.-% aqueous AIBN solution (azodiisobutyronitrile), 5.5 g of a 1 wt.-% aqueous t-BHPO solution (t-butyl hydroperoxide) and 3.5 g of a 1 wt.-% aqueous sodium sulphite solution were added consecutively. When the monomer solution began to thicken the nitrogen feed pipe was removed. After the temperature of the gel reached its maximum the thermos bottle was kept for two hours at 80 °C in a drying oven. Thereafter, the gel block was removed from the bottle, about 0.5 to 1 cm of the surface was cut off and the remaining part was comminuted with a mincer. The obtained granulate was dried for 2h at 55°C. a white hard granulate was obtained that was pulverized with a centrifugal mill.

### Rheological characterization

### a) Viscosity measurements

The viscosity of six copolymer solutions was determined by using an Anton Paar MCR 502 apparatus (pressure cell C33.2/XL PR with a cylinder-cone measuring system, 20 bar during measurement, 95 rpm for temperature profiles). The concentration of copolymers applied was 0.6% in deionized water. The copolymers applied had the following compositions (the numbering 1) to 7) will be further applied as a reference to the explicit copolymers):
1) AM/AA/HBVE-24.5 EO-12PeO in a ratio of 87%/8%/5% (A23927)
2) AM/AA = 92%/8% (A23955)
3) AM/AA/HBVE-24.5EO-16BuO-3.5EO in a ratio of 87%/8%/5% (A23928)
4) AMPS/AA/AM/HBVE-24.5EO-16BuO-3.5EO in a ratio of 38.6%/2%/54.4%/5% (A20441)
5) AMPS/AA/AM in a ratio of 38.6%/2%/59.4% (A22842)
6) AMPS/AA/AM/HBVE-24,5EO-12PeO in a ratio of 38.6%/2%/54.4%/5% (A23776) (AA = acrylic acid, AM = acryl amide, AMPS = acrylamidomethylpropanesulphonic acid)

The test solutions were prepared as follows:
A 400 mL vessel was charged with 248,5 g of deionized water and an IKA-stirrer was attached. At a rotation speed of 300 rpm 1,5 g of copolymer were slowly added. During the addition the rotation speed was adjusted from time to time, in order to guarantee optimal mixing. In total the rotation speed was increased to 350 rpm and the solution was stirred overnight. The viscosity in [mPas] of the six different test solutions was determined for different temperature profiles in correlation with the time.

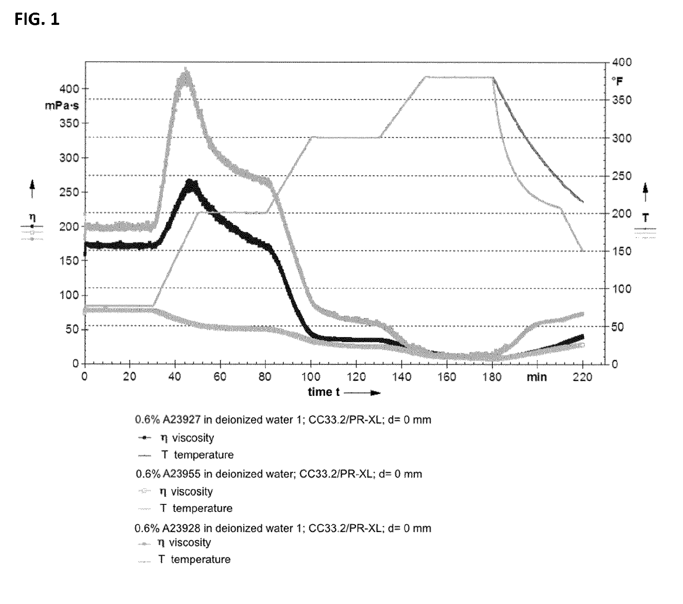

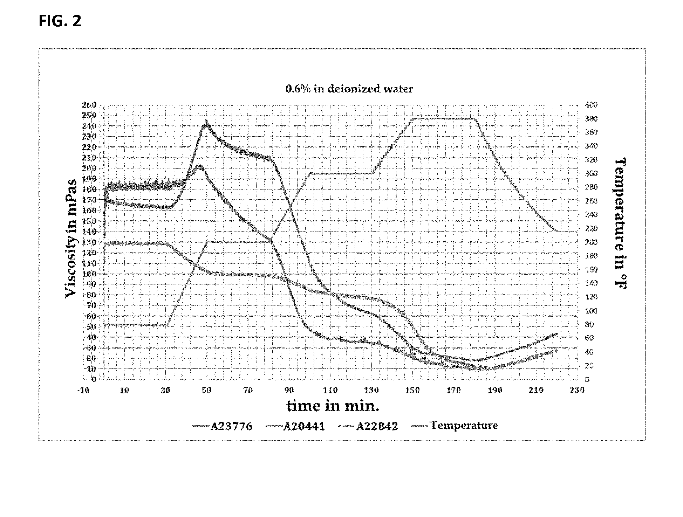

An overview of the results is depicted in **Fig. 1** and **Fig. 2**. More precisely, it is shown in **Fig. 1** that for a temperature of about 80 °F the test solutions provide basically constant viscosity values (about 170 mPas for (1), about 75 mPas for (2) and about 200 mPas for (3)). During an increase of temperature to 200 °F viscosity for (1) and (3) increased up to about 270 mPas for (1) and up to more than 400 mPas for (3), the viscosity for (2) decreased during the temperature increase. For a longer time range at 200 °F and also a further increase of temperature, viscosity for all three samples decreased. Thus, Fig. 1 shows that:
- The polyacrylamide samples containing associative thickeners (1), (3) have a much higher viscosity than thickener (2) having no associative thickener side chain.
- The viscosity of associative thickening polymer (3) is higher than the one of (2), indicating the impact of the type of associative thickener on the rheological profile.
- The viscosity of associative thickening polymers (1), (3) increases with temperature up to a maximum, before it decreases again, giving an overall higher viscosity for a longer period of time at the same temperature than the non-associative equivalent (2).

**Fig. 2** shows that for a temperature of about 50 °F the test solutions provide basically constant viscosity values (about 160 to 170 mPas for (4), about 130 mPas for (5) and about 180 to 190 mPas for (6)). During an increase of temperature to 200 °F viscosity for (4) and (6) increased (up to about 245 mPas for (4), and up to about 200 mPas for (6)) but (5) decreases to about 100 mPas. For a longer time range at 200 °F and also a further increase of temperature, viscosity for all three samples decreased again. Thus, Fig. 2 shows that:
- Associative thickening polymers (4), (6) show a higher initial viscosity than (5). Viscosity of (4), (6) increases with increasing temperature until it reaches a maximum. Only then viscosity of (4), (6) decreases with temperature. By contrast, the equivalent non-associative thickening polymer (5) shows overall a lower viscosity and a drop in viscosity when temperature is increased.
- Maximum viscosity of associative thickener polymer (4), containing the same associative thickener side chain as in (3), is higher than (6) with the side chain as in (1).

### b) Determination of gel content

For copolymers (1), (2) and (3) as introduced in chapter a) gel contents were determined. Test solutions were prepared as follows: A 1000 mL polyethylene bottle was charged with 999.0 g of water and a stirrer was attached. 1.00 g of copolymer were added slowly under strong stirring, in order to prevent aggregation. After complete addition, the rotation speed was adjusted to 300±5 rpm and the solution was stirred for 60 min. After that the solution was cast onto a 315 µm sieve and the residue was washed with five liters of water. After five minutes of dripping the residual gel was transferred into a graduated cylinder and the volume [mL] was determined. The determined volume corresponded to the gel content. The results were as follows:
Copolymer (1): 59 mL
Copolymer (2): 1 mL
Copolymer (3): 42 mL

### c) Viscosity in correlation with shear rate and temperature

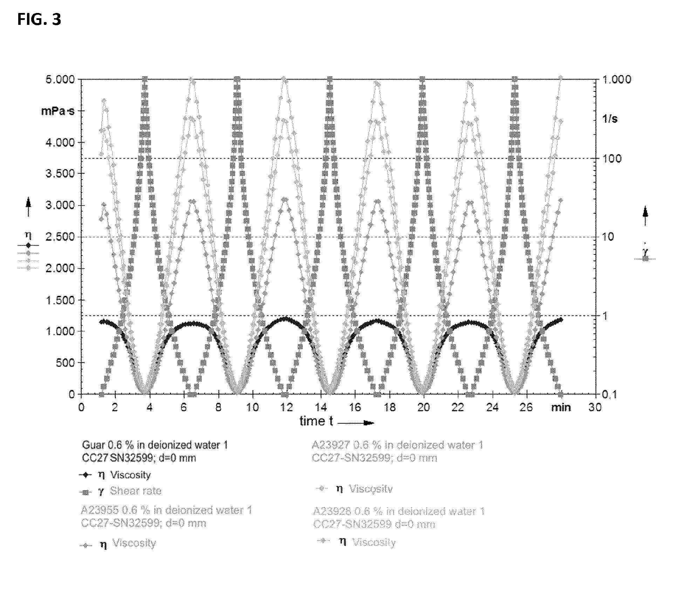

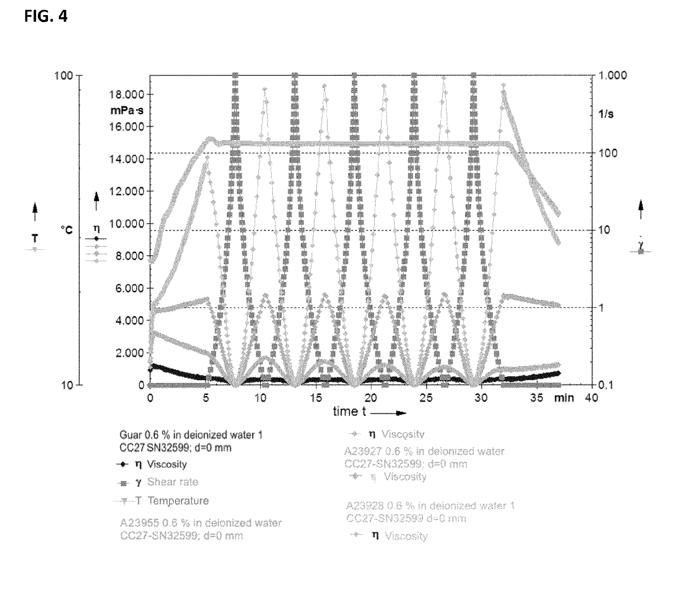

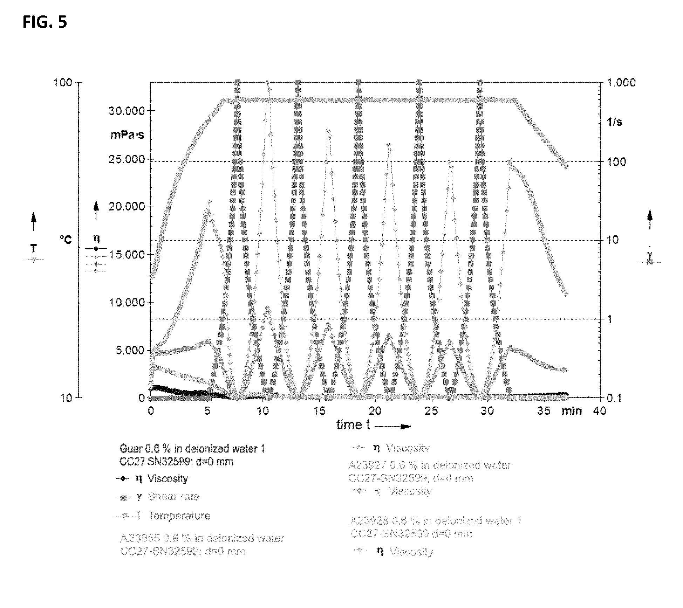

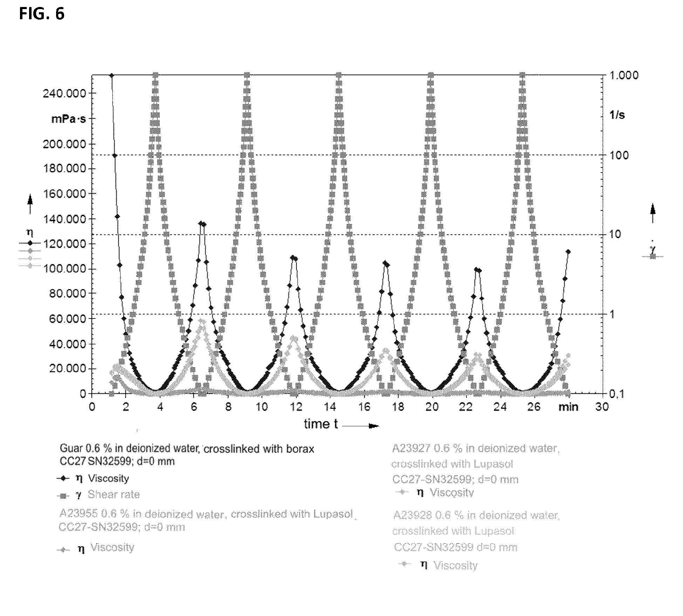

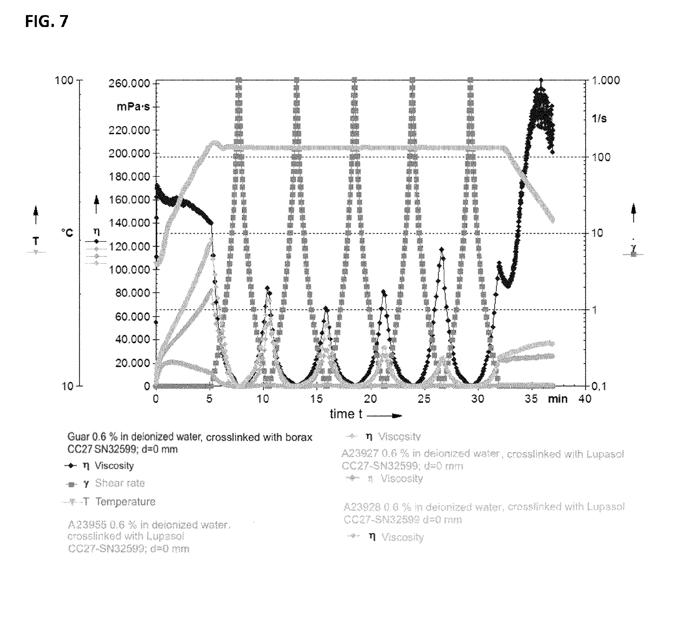

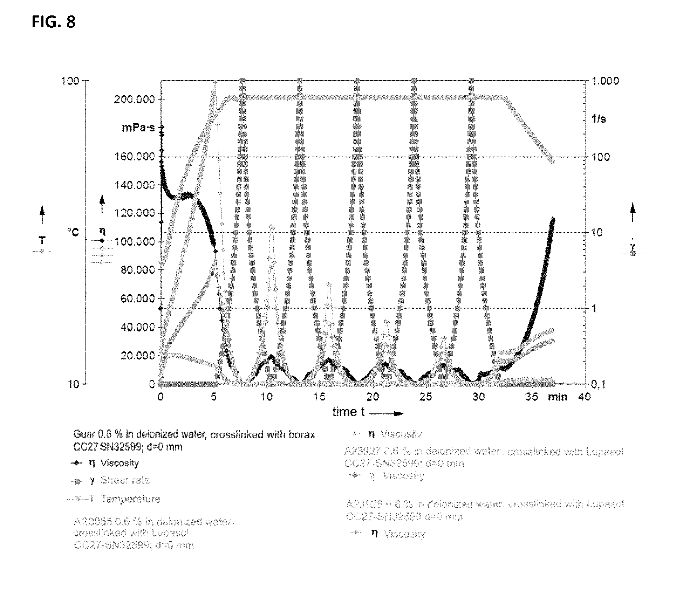

For copolymers (1), (2) and (3) the viscosity was determined for shear rate sweeps from 0.1 to 1000 1/s at temperatures of 25 °C, 60 °C and 88 °C. Viscosity determination was performed employing an Anton Paar MSC 502 apparatus. Besides the non-crosslinked copolymers (1), (2) and (3) also its crosslinked analogues were measured. The crosslinked samples were prepared as follows: A 100 mL glass bottle was charged with 83.3 g of copolymer solution (for the preparation of the solution see chapter a) Viscosity measurements) and 1.7 g of a crosslinking agent (Lupasol PS, a 33% aqueous solution of polyethylenimine) were added. The mixture was strongly shaken and was allowed to stand for three days and nights. As a comparative sample a non-cross-linked and a crosslinked Guar sample (Guar was commercially available from Sigma-Aldrich) was applied (83.3 g of polymer solution were crosslinked in 100 mL glass bottle after addition of 1.7 g of a 33% sodium tetraborate decahydrate suspension in water). Fig. 3 to 8 show an overview of these measurements, viscosity was correlated with time and shear rate. Crosslinked samples of (1), (2) and (3) decomposed at 60 °C and 88 °C. Figures 3-8 show that:

Fig. 3:
- All polymers show shear-re-healing behavior, but the highest viscosity is generated by the polyacrylamides.
- Associative thickening polymer (1), (3) have a higher viscosity than the equivalent non-associative polyacrylamide at the same concentration.
- The associative thickening polymer (3) shows a higher viscosity than the associative thickening polymer (1).
- Associative thickening polymer (3) gives the best proppant carryability of all polymers tested at 25°C at a given dosage.

Fig. 4:
- All polyacrylamides show shear re-healing properties and the viscosity of the polyacrylamides is higher than that of guar
- Associative thickening polymer (1), (3) have a higher viscosity than the equivalent non-associative polyacrylamide at the same concentration.
- The associative thickening polymer (3) shows a higher viscosity than the associative thickening polymer (1).
- The viscosity of the associative thickening polymers (1), (3) has increased over 25°C, yet the non-associative thickening polyacrylamide (2) has decreased in viscosity compared to 25°C.
- Associative thickening polymer (3) gives the best proppant carryability of all polymers tested at 60°C at given dosage.

Fig. 5:
- Guar lost its viscosity within 15 min (decomposed).
- All associative thickening polymers (1), (3) still showed shear re-healing behavior and had significant higher viscosity than the non-associative thickening polymer as well as guar.
- Associative thickening polymer (3) had much higher viscosity than associative thickening polymer (1).

Fig. 6:
- All polymers show shear-re-healing behavior, but the highest viscosity is generated by guar
- Associative thickening polymer (1), (3) have a higher viscosity as the equivalent non-associative polyacrylamide at the same concentration.
- The associative thickening polymer (3) shows similar viscosity than the associative thickening polymer (1).
- Guar gives the best proppant carryability of all polymers tested at 25°C at given dosage.

Fig. 7:
- All associative thickening polyacrylamides and guar show shear re-healing properties .
- Associative thickening polymer (1), (3) have a higher viscosity than the equivalent non-associative polyacrylamide at the same concentration.
- The associative thickening polymer (3) shows slightly higher viscosity than the associative thickening polymer (1). There is some loss in viscosity over time, probably due to oxygen in the fluid sample (oxidative decomposition).
- The highest viscosity is achieving cross-linked guar.

Fig. 8:
- All samples lost some of their original viscosity, most likely due to oxygen still within the fluid (oxidative decomposition).
- All associative thickening polymers (1), (3) and guar still showed shear re-healing behavior.
- Associative thickening polymer (3) had higher viscosity than associative thickening polymer (1).
- All associative thickening polymers (1), (3) had higher viscosity than guar and the non-associative thickening polymer (2).
- Associative thickening polymers showed an increase in viscosity from 25°C to 88°C, indicating better preparation of a fluid with proppant (easier and better to homogenize /blend) than with guar due to lower viscosity at lower (25°C) temperature whereas proppant carryability increases and becomes higher than the one of guar, when fluid is in hotter formations downhole. The typical loss in viscosity and hence performance with temperature for guar, can be overcome with associative thickening polyacrylamides. Both, handling (lower viscosity than guar) and performance (higher viscosity at higher temperature) is superior for associative thickening polyacrylamide than for guar.

### Crosslinking tests in presence of a proppant

For copolymers (1), (2) and (3) the sinking behaviour and the behaviour under crosslinking conditions were investigated. Therefore, 0,6% solutions of these copolymers were prepared under the following conditions: A 600 mL beaker was charged with 497.0 g water (distilled) and an IKA-stirrer was attached. 3.00 g of copolymer were added under stirring and the mixture was stirred overnight at a rotation speed of 350 rpm.
Sinking behaviour:

A 50 mL glass bottle was charged with 49.0 g of the obtained 0.6% copolymer solution and 1.00 g of a proppant (Carbo Econoprop/Ceramic Proppant = 20/40 or Ottawa Sand/Unifrac 20/40) were added. The solution was strongly shaken in order to achieve good distribution. After placing the glass bottle on a plane surface the time range, until all of the proppant has been sunk to the ground, was determined. For an overview see the following tables:

**Table 1**

| Copolymer + Ottawa Sand/Unifrac 20/40 | Time (1. Measurement) | Time (repetition) |
|---|---|---|
| (1) | 38 min 39 sec | 35 min 17 sec |
| (2) | 16 min 22 sec | 23 min 37 sec |
| (3) | 37 min 36 sec | 36 min 4 sec |

**Table 2**

| Copolymer + Carbo Econoprop/ Ceramic Proppant = 20/40 | Time (1. Measurement) | Time (repetition) |
|---|---|---|
| (1) | 14 min 3 sec | 14 min 22 sec |
| (2) | 8 min 13 sec | 8 min 17 sec |
| (3) | 16 min 55 sec | 14 min 58 sec |

A more accurate determination of time was not possible, because proppant and present air bubbles were hardly distinguishable.

### Crosslinking in presence of a proppant

To the obtained aqueous solution of copolymer and proppant 1.00 g of chromium acetate were added. The solution was shaken and then placed on a plane surface. Following observations have been made for different copolymer compositions:
Copolymer (1) + Ottawa Sand/Unifrac 20/40 + chromium acetate: Crosslinking appeared after a few days, the solution did still run out of the glass bottle (licking).
Copolymer (2) + Ottawa Sand/Unifrac 20/40 + chromium acetate: Crosslinking appeared after a few days, the solution did not run out of the glass bottle anymore.
Copolymer (3) + Ottawa Sand/Unifrac 20/40 + chromium acetate: Crosslinking appeared after a few days, the solution did not run out of the glass bottle anymore (solid gel).

Further, crosslinking attempts at increased temperature have been performed. Therefore, the shaken solution of copolymer, proppant, chromium acetate and water (amounts equal to crosslinking at room temperature) were placed in a drying oven at 60 °C for 21 h.
Copolymer (1) + Carbo Econoprop/Ceramic Proppant 20/40 + chromium acetate: Crosslinking appeared partly, the other part remained liquid.
Copolymer (2) + Carbo Econoprop/Ceramic Proppant 20/40 + chromium acetate: Crosslinking appeared resulting in a moveable gel that ran out of the bottle.
Copolymer (3) + Carbo Econoprop/Ceramic Proppant 20/40 + chromium acetate: Crosslinking appeared resulting in a moveable gel that did not run out of the bottle anymore.

### Breaker experiments

A 100 mL glass bottle was charged with 49.0 g of a 0.6% copolymer (1), 82) or (7)) solution and 1.0 g of a crosslinking agent (chromium acetate, zirconium acetate or zirconyl chloride) and the mixture was shaken. 1.00 g of a breaker (ammonium persulfate or sodium bromate) were added and the mixture was shaken again. After that the optical appearance of the solution was determined for the first time. For the second time the optical appearance of the solution was determined after storage at 140 °F in a drying oven over night.

Copolymer/chromium acetate/ammonium persulfate:

**Table 3**

| Copolymer | No heating | After heating to 140°F |
|---|---|---|
| (1) | Copolymer decomposes partly, some gelled agglomerates remain | Agglomerates disappear resulting in a highly fluid solution |
| (2) | Copolymer decomposes, some gelled agglomerates remain | Agglomerates disappear resulting in a highly fluid solution |
| (3) | Copolymer decomposes partly, some gelled agglomerates remain | Agglomerates disappear resulting in a highly fluid solution |

Copolymer/zirconyl chloride/ammonium persulfate:

**Table 4**

| Copolymer | No heating | After heating to 140°F |
|---|---|---|
| (1) | Copolymer decomposes partly, several gelled, white agglomerates remain | Several white solid agglomerates remain; no colour change of the solution |
| (2) | Copolymer decomposes partly, a slimy clump remains | A white clump remains; however smaller than directly after breaker addition, no colour change of the solution |
| (3) | Copolymer decomposes partly, several gelled, white agglomerates remain | Several white solid agglomerates remain, no colour change of the solution |

Copolymer/zirconium acetate/ammonium persulfate:

**Table 5**

| Copolymer | No heating | After heating to 140°F |
|---|---|---|
| (1) | No visible decomposition; a gelled part remains | No complete decomposition; highly fluid solution, one clump remains |
| (2) | No visible decomposition; a gelled part remains | No complete decomposition; highly fluid solution, one clump remains |
| (3) | No visible decomposition; a gelled part remains | No complete decomposition; highly fluid solution, one clump remains |

Copolymer/chromium acetate/sodium bromate:

**Table 6**

| Copolymer | No heating | After heating to 140°F |
|---|---|---|
| (1) | Copolymer decomposes partly, several slimy agglomerates remain | Agglomerates disappear resulting in a highly fluid solution |
| (2) | Copolymer decomposes, some gelled agglomerates remain | Agglomerates disappear resulting in a |
| (3) | Copolymer decomposes partly, several slimy agglomerates remain | Agglomerates disappear resulting in a highly fluid solution |

Copolymer/zirconyl chloride /sodium bromate:

**Table 7**

| Copolymer | No heating | After heating to 140°F |
|---|---|---|
| (1) | Partial decomposition of copolymer, white, slimy agglomerate remains | Colour of solution changes to yellow; several white agglomerates remain |
| (2) | Partial decomposition of copolymer, white, slimy agglomerate remains | Colour of solution changes to yellow; one white agglomerate remains |
| (3) | Partial decomposition of copolymer, white, slimy agglomerate remains | Colour of solution changes to yellow; one white agglomerate remains |

Copolymer/zirconium acetate/sodium bromate:

**Table 8**

| Copolymer | No heating | After heating to 140°F |
|---|---|---|
| (1) | No visible decomposition of copolymer, a gelled part remains | No complete decomposition; still viscous, spherical, gelled agglomerates are present |
| (2) | No visible decomposition of copolymer, a gelled part remains | No complete decomposition; still viscous, spherical, gelled agglomerates are present |
| (3) | No visible decomposition of copolymer, a gelled part remains | No complete decomposition; still viscous, spherical, gelled agglomerates are present |

## Claims

1. A formulation comprising
(1) at least one hydrophobically associating copolymer having a weight-average molecular weight M_{W} of 1.105 g/mol to 30·10⁶ g/mol, comprising
(a) 0.1 to 20 % by weight of units derived from a monomer of general formula (I)
H₂C=C(R¹)-R²-O-(-CH₂-CH₂-O-)ₖ-(-CH₂-CH(R³)-O-)i-(-CH₂-CH₂-O-)ₘ-R⁴ (I)
wherein
the (-CH₂-CH₂-O-)ₖ and (-CH₂-CH(R³)-O-)ₗ and optionally -(-CH₂-CH₂-O-)ₘ units are arranged in block structure in the sequence shown in formula (I);
the radicals and indices are each defined as follows:
k: is a number from 10 to 150;
I: is a number from 5 to 25;
m: is a number from 0 to 15;
R¹: is H or methyl;
R²: is independently a single bond or a divalent linking group selected from the group consisting of -(CₙH₂ₙ)- and -O-(C_{n'}H_{2n'})-, where n is an integer from 1 to 6 and n' is an integer from 2 to 6;
R³: is independently a C₂-C₆ hydrocarbyl group or an ether group of the general formula -CH₂-O-R³' where R^{3'} is a C₂-C₆ hydrocarbyl group;
R⁴: is independently H or a hydrocarbyl radical having 1 to 6 carbon atoms;
(b) 80 to 99.9% by weight of units derived from at least one monoethylenically unsaturated, hydrophilic monomers (b), where the monomer (b) comprises
(b1) at least one uncharged, monoethylenically unsaturated, hydrophilic monomer (b1), selected from the group of (meth)acrylamide, N-methyl(meth)acrylamide, N,N'-dimethyl(meth)acrylamide or N-methylol(meth)acrylamide, and/or
(b2) at least one anionic, monoethylenically unsaturated, hydrophilic monomer (b2) which comprises at least one acidic group selected from the group of -COOH, -SO₃H and -PO₃H₂ and salts thereof,
where the proportions are each based on the total amount of all monomer units in the copolymer,
(2) a crosslinking agent selected from the group consisting of a salt of a metal having a valency of > +3, a polyalkyleneimine and a polyalkyleneamine; and
(3) a proppant.

2. The formulation of claim 1, wherein the radicals and indices of formula (I) are each defined as follows:
k: is a number from 23 to 26;
l: is a number from 15 to 18;
m: is a number from 2 to 5;
R¹: is H;
R²: is a single bond or -(CₙH₂ₙ)-;
R³: is ethyl;
R⁴: is H;

3. The formulation of claim 1 or 2, wherein monomer (b1) is selected from acrylamide and methacrylamide or a mixture thereof.

4. The formulation of any of the preceding claims, wherein monomer (b2) is selected from (meth)acrylic acid, vinylsulfonic acid, allylsulfonic acid, 2-acrylamido-2-methylpropanesulfonic acid (AMPS), 2-methacrylamido-2-methylpropanesulfonic acid, 2-acrylamidobutanesulfonic acid, 3-acrylamido-3-methylbutanesulfonic acid or 2-acrylamido-2,4,4-trimethylpentanesulfonic acid, and vinylphosphonic acid and a mixture of two or more thereof.

5. The formulation of any of the preceding claims, wherein the copolymer comprises units (b) derived from at least one monomer (b1) and at least one monomer (b2).

6. The formulation of claim 5, wherein
monomer (b1) is acrylamide and monomer (b2) is acrylic acid, or
monomer (b1) is acrylamide and monomer (b2) is 2-acrylamido-2-methylpropanesulfonic acid (AMPS), or
monomer (b1) is acrylamide and monomer (b2) is a mixture of acrylic acid and 2-acrylamido-2-methylpropanesulfonic acid (AMPS).

7. The formulation of any of the preceding claims, wherein the formulation additionally comprises at least one cationic, monoethylenically unsaturated monomer (b3) having ammonium groups selected from salts of 3-trimethylammonium propyl(meth)acrylamides or 2-trimethylammonium ethyl(meth)acrylates or mixtures thereof.

8. The formulation of any of the preceding claims, wherein the crosslinking agent is selected from titanium (IV) ions, zirconium (IV) ions, chromium (III) ions, cobalt (III) ions, aluminum (III) ions, hafnium (III) ions and boron (III).

9. The formulation of any one of claims 1 to 6, wherein the crosslinking agent is selected from polyethyleneimine, polypropyleneimine, polybutyleneimine, polyethyleneamine, polypropyleneamine and polybutyleneamine.

10. The formulation of any of the preceding claims, wherein the proppant has a particle size of 100 µm to 3 mm, in particular 200 µm to 1 mm.

11. The formulation of any of the preceding claims, wherein the proppant is selected from group of minerals, ceramics, sands, nut shells, gravels, mine tailings, coal ashes, rocks, smelter slag, diatomaceous earth, crushed charcoals, micas, sawdust, wood chips, resinous particles, polymeric particles, and combinations thereof.

12. The formulation of any one of the preceding claims, wherein the copolymer is contained in the formulation in an amount of from 0.0001 to 5 % by weight based on the total weight of the formulation.

13. The formulation of any of the preceding claims additionally containing a breaker.

14. The formulation of claim 13, wherein the breaker is an oxidizing breaker.

15. The formulation of claim 14, wherein the oxidizing breaker is selected from at least one of a bromate breaker, a chlorite breaker, a peroxide breaker, a perborate breaker, a percarbonate breaker, a perphosphate breaker, or a persulfate breaking agent.

16. A process for the exploitation and completion of underground crude oil and natural gas deposits, which comprises
i) introducing the formulation according to any of the preceding claims into a subterranean formation,
ii) allowing the formulation to form a gel in the subterranean formation and
iii) optionally breaking the gel after it has been formed in the subterranean formation .

17. A process for the exploitation and completion of underground crude oil and natural gas deposits, which comprises
i) introducing the formulation according to any one of claims 1 to 15 into a subterranean formation, and
ii) allowing the formulation to form a crosslinked gel in the subterranean formation that, after formation, does not flow under *in situ* stress within the subterranean formation.

18. Use of the formulation according to claims 1 to 15 for hydraulic fracturing.
